# EUROPÄISCHE PATENTSCHRIFT

(11) **EP 4 412 827 B1**
(45) Veröffentlichungstag und Bekanntmachung des Hinweises auf die Patenterteilung: **01.01.2025**
(21) Anmeldenummer: 21805379.1
(22) Anmeldetag: 07.10.2021
(51) Int. Cl.: B32B 5/02, B32B 7/12, B32B 23/08, B32B 27/12, B32B 27/10, B32B 27/08, B32B 27/06, B32B 27/16, B32B 27/20, B32B 27/18, B32B 27/36, B32B 27/34, B32B 27/32, B32B 27/30, B32B 27/40, B32B 29/06, B32B 27/22, C09J 133/04, C09J 5/02, C09J 175/04

(54) **ASYMMETRISCHES KLEBEMITTEL**
ASYMMETRIC ADHESIVE
ADHÉSIF ASYMÉTRIQUE

(43) Veröffentlichungstag der Anmeldung: 14.08.2024
(73) Patentinhaber: Lohmann GmbH & Co. KG, 56567 Neuwied (DE)
(72) Erfinder: ELLER, Jan, 56626 Andernach (DE); LANTERS, Mark Pascal, 56182 Urbar (DE)
(86) Internationale Anmeldenummer: PCT/EP2021/077745
(87) Internationale Veröffentlichungsnummer: WO 2023/057065

(56) Entgegenhaltungen:
- EP-A1- 2 855 612
- EP-B1- 2 855 612
- WO-A1-2020/108765
- CN-A- 103 059 792
- DE-A1- 102013 217 880
- DE-U1- 202009 015 262
- US-A1- 2014 127 501

## Beschreibung

Die Erfindung bezieht sich auf ein asymmetrisches Klebemittel gemäß dem Anspruch 1 sowie auf ein Verfahren zur Herstellung eines asymmetrischen Klebemittels gemäß dem Anspruch 5.

Es ist bekannt, zur Verbindung zweier unterschiedlicher Fügepartner asymmetrische Klebemittel zu verwenden, welche zwei gegenüberliegende Klebstoffschichten aufweisen, welche aus zwei unterschiedlichen thermoplastischen Klebstoffen bestehen. Jedoch sind diese asymmetrischen Klebemittel nicht für jede erdenkliche Kombination von Fügepartnern geeignet. Bekannte thermoplastische Klebstoffe haben häufig bei Textil-Fügepartnern Schwierigkeiten, eine starke und langanhaltende Haftung zu erreichen.

Aus US 2014/0127501 A1 und WO 2013/178642 A1 ist ein doppelseitiges Klebeband bekannt, welches eine Haftklebstoffschicht und eine thermoplastische Klebstoffschicht aufweist.

Aus CN 103059792 A sind Polyester-Elastomere bekannt, welche eine besonders gute Haftung auf metallischen Fügepartnern aufweisen.

Aus WO 2020/108765 A1 ist ein Polyurethan-Klebefilm bekannt, welcher latent reaktiv ist und eine kristalline und/oder kristalline und amorphe Polyurethankomponente aufweist.

Aus DE 10 2013 217 880 A1 ist ein latent reaktives Klebeprodukt bekannt, welches aus einer latent reaktiven Klebstoffschicht und einem temporären Träger besteht, wobei die Klebstoffschicht mit Isocyanat reagieren kann und Isocyanat-haltige eindispergierte Partikel aufweist.

Aus DE 20 2009 015 262 U1 ist eine latent reaktive Klebmasse bekannt, welche bereits bei Raumtemperatur leicht haftklebend ist.

Die Aufgabe der Erfindung besteht insbesondere darin, ein gattungsgemäßes Klebemittel bereitzustellen, welches auf eine einfache und kostengünstige Weise eine verbesserte Verbindung von bisher nur schwer verbindbaren Fügepartnern ermöglicht. Die Aufgabe wird erfindungsgemäß durch die Merkmale der Ansprüche 1 und 5 gelöst, während vorteilhafte Ausgestaltungen und Weiterbildungen der Erfindung den Unteransprüchen entnommen werden können.

Die Erfindung geht aus von einem asymmetrischen Klebemittel zur Verbindung zweier unterschiedlicher Fügepartner, mit einer ersten Klebstoffschicht und einer der ersten Klebstoffschicht gegenüberliegend angeordneten zweiten Klebstoffschicht.

Es wird vorgeschlagen, dass die erste Klebstoffschicht zumindest einen reaktiven Klebstoff aufweist und die zweite Klebstoffschicht zumindest einen thermoplastischen Klebstoff aufweist. Hierdurch kann eine Anzahl an möglichen Fügepartnern, die miteinander verbunden werden können, erhöht werden. Vorteilhaft erlaubt die Kombination zweier unterschiedlicher Klebstoffarten das Verbinden von Fügepartnern, die aufgrund ihrer Materialeigenschaften eine unterschiedlich hohe Kompatibilität mit einer Klebstoffart aufweisen und damit bei zwei zueinander identischen Klebstoffschichten keine zufriedenstellende Haftung aneinander erlauben.

Insbesondere können sich die Fügepartner durch eine Mehrzahl an Materialeigenschaften, welche Auswirkung auf eine Haftung von Klebemitteln auf den Fügepartnern haben, voneinander unterscheiden. Beispielsweise können sich die Fügepartner durch eine chemische Zusammensetzung, eine Oberflächenenergie, eine Rauheit, eine Härte, eine Dehnbarkeit, einen thermischen Expansionskoeffizienten, eine mikroskopische Struktur, eine makroskopische Struktur, eine mikroskopische Oberflächenform und/oder eine makroskopische Oberflächenform unterscheiden. Vorteilhaft weisen die Fügepartner zumindest zwei voneinander unterschiedliche Materialien auf. Beispielsweise könnten die Fügepartner eine beliebige Kombination von Metallen, Gläsern, Kunststoffen, Elastomeren, Zellstoffen, Textilien und/oder Beschichtungen aufweisen.

Es ist möglich, dass die Klebstoffschichten als vollflächige Klebstoffschichten ausgebildet sind. Alternativ können eine oder beide der Klebstoffschichten als eine teilflächige Klebstoffschicht ausgebildet sein und insbesondere zumindest eine Aussparung und/oder Einbuchtung aufweisen. Insbesondere können eine oder beide der Klebstoffschichten in Form eines beliebigen Musters, wie beispielsweise eines Netzes oder Gitters, ausgebildet sein. Ferner wäre denkbar, dass die Klebstoffschichten aus einer Vielzahl von separaten Klebstoffelementen bestehen, welche beispielsweise rechteckig, oval, strichförmig, mäanderförmig oder amorph ausgebildet sein könnten.

Ferner wäre möglich, dass eine oder beide der Klebstoffschichten zumindest eine Hervorhebung aufweisen.

Die Klebstoffschichten können insbesondere durch beliebige, dem Fachmann geläufige, Verfahren aufgebracht sein. Beispielsweise können die Klebstoffschichten mittels herkömmlicher Beschichtungsverfahren, wie beispielsweise einer Vorhangbeschichtung oder Rakelbeschichtung, aufgebracht sein. Alternativ können die Klebstoffschichten mittels herkömmlicher 2D- oder 3D-Druckverfahren, wie beispielsweise einem Siebdruck, 3D-Siebdruck, Tintenstrahldruck und/oder LAM-Druck aufgebracht sein.

Darunter, dass die zweite Klebstoffschicht der ersten Klebstoffschicht gegenüberliegend angeordnet ist, soll verstanden werden, dass die Klebstoffschichten jeweils eine der anderen Klebstoffschicht zugewandte Hauptseite und jeweils eine der anderen Klebstoffschicht abgewandte weitere Hauptseite aufweisen.

Unter einem "reaktiven" Klebstoff soll ein Klebstoff verstanden werden, welcher einen unvernetzten Zustand und einen vernetzten Zustand aufweist und durch eine Vernetzungsreaktion irreversibel von dem unvernetzten Zustand in den vernetzten Zustand überführbar ist. Es ist möglich, dass die erste Klebstoffschicht in dem unvernetzten Zustand des reaktiven Klebstoffs permanent haftklebrig ist, alternativ könnte die erste Klebstoffschicht in dem unvernetzten Zustand lediglich unter bestimmten Bedingungen haftklebrig sein, wie beispielsweise direkt nach einer Initiierung der Vernetzungsreaktion. Die erste Klebstoffschicht ist in dem vernetzten Zustand des reaktiven Klebstoffs frei von haftklebrigen Oberflächen. Eine Geschwindigkeit der Vernetzungsreaktion hängt insbesondere von der Art des reaktiven Klebstoffs ab. Denkbar wäre, dass die Vernetzungsreaktion langsam genug verläuft, um eine Anordnung des asymmetrischen Klebemittels an den Fügepartnern nach einer Initiierung der Vernetzungsreaktion zu ermöglichen. Alternativ könnte die Vernetzungsreaktion schnell verlaufen und eine Initiierung der Vernetzungsreaktion nach der Anordnung des asymmetrischen Klebemittels an den Fügepartnern erzwingen. Es wäre denkbar, dass der reaktive Klebstoff als ein Mehrkomponenten-Klebstoff ausgebildet ist, bevorzugt ist der reaktive Klebstoff als ein Einkomponenten-Klebstoff ausgebildet.

Unter einem "thermoplastischen" Klebstoff soll ein Klebstoff verstanden werden, welcher eine Schmelztemperatur aufweist, welche einen, unabhängig von einem Zustand des Klebstoffs, reversiblen Übergang zwischen einem flüssigen oder hochviskosen Zustand und einem festen Zustand des Klebstoffs definiert. Insbesondere ist der thermoplastische Klebstoff frei von vernetzten Zuständen, welche den reversiblen Übergang verhindern würden. Vorzugsweise ist die zweite Klebstoffschicht in dem flüssigen oder hochviskosen Zustand des thermoplastischen Klebstoffs haftklebrig. Besonders bevorzugt ist die zweite Klebstoffschicht in dem festen Zustand des thermoplastischen Klebstoffs frei von haftklebrigen Oberflächen. Insbesondere ist der thermoplastische Klebstoff dazu vorgesehen, vor dem Anordnen des asymmetrischen Klebemittels an den Fügepartnern in dem flüssigen oder hochviskosen Zustand und nach dem Anordnen des asymmetrischen Klebemittels an den Fügepartnern in dem festen Zustand vorzuliegen. Vorzugsweise liegt der thermoplastische Klebstoff vor dem Anordnen des asymmetrischen Klebemittels an den Fügepartnern teilweise, insbesondere an einer Oberfläche der zweiten Klebstoffschicht, in dem flüssigen oder hochviskosen Zustand vor. Alternativ kann der thermoplastische Klebstoff nach dem Anordnen des asymmetrischen Klebemittels an den Fügepartnern in dem festen Zustand vorliegen, in diesem Fall erfolgt nach dem Anordnen des asymmetrischen Klebemittels an den Fügepartnern ein zusätzlicher Erhitzungsschritt zur kurzzeitigen Überführung des thermoplastischen Klebstoffs in den flüssigen oder hochviskosen Zustand.

Der thermoplastische Klebstoff kann insbesondere beliebige, dem Fachmann im Bereich der thermoplastischen Klebstoffe bekannte, Substanzen aufweisen. Beispielsweise könnte der thermoplastische Klebstoff zumindest ein Basispolymer in Form von einem Polyamid, Polyethylen, Polyalphaolefin, Ethylenvinylacetat-Copolymer, Copolyester-Elastomer, Polyurethan-Elastomer, Copolyamid-Elastomer und/oder Vinylpyrrolidon/Vinylacetat-Copolymer aufweisen. Ferner könnte der thermoplastische Klebstoff zumindest einen Zusatzstoff in Form eines Harzes, insbesondere Kolophonium, Terpene und/oder Kohlenwasserstoffharze, eines Stabilisators, insbesondere Amine, Phenole, Metalldesaktivatoren und/oder Lichtschutzmittel, eines Wachses, insbesondere synthetische Wachse und/oder natürliche Wachse, eines Weichmachers, insbesondere Phthalsäureester, eines Streckmittels, insbesondere Kreide, Schwerspat oder Titandioxid und/oder eines Nukleierungsmittels aufweisen.

Der thermoplastische Klebstoff weist zumindest ein Copolyester-Elastomer aufw. Es wäre denkbar, dass der thermoplastische Klebstoff weitere Substanzen, insbesondere weitere Klebstoffe und/oder Zusatzstoffe aufweist. Bevorzugt besteht der thermoplastische Klebstoff vollständig aus dem Copolyester-Elastomer. Hierdurch kann das asymmetrische Klebemittel zur Fixierung eines metallischen Fügepartners an einen nichtmetallischen Fügepartner verwendet werden und damit in vielen verschiedenen Anwendungsbereichen, wie beispielsweise dem Metall-Handwerk und der Automobilindustrie, zum Einsatz kommen.

Eine Schmelztemperatur des thermoplastischen Klebstoffs beträgt mindestens 90°C, vorteilhaft mindestens 100°C und besonders vorteilhaft mindestens 110°C. Hierdurch kann ein ungewolltes Lösen der Verbindung der Fügepartner vermieden werden, insbesondere bei Anwendungen in der Automobilindustrie, wo die Fügepartner regelmäßig hohen Temperaturen ausgesetzt sein können.

Der reaktive Klebstoff kann insbesondere beliebige, dem Fachmann im Bereich der reaktiven Klebstoffe bekannte, Substanzen aufweisen. Beispielsweise könnte der reaktive Klebstoff als ein Polyadditionsklebstoff, ein Polykondensationsklebstoff oder als ein Polymerisationsklebstoff ausgebildet sein. Ferner könnte der reaktive Klebstoff zumindest ein Amin, Amid, Carbonsäureanhydrid, Merkaptan, Epoxidharz, Polyurethan, Silikon, silan-modifizierte Polymere, Phenolharze, Cyanacrylat, Methylmethacrylat, Methacrylat, Cumolhydroperoxid und/oder Saccarin aufweisen. Insbesondere kann der reaktive Klebstoff Zusatzstoffe in Form von Härtern, insbesondere Dicyandiamid und/oder Isocyanat, Füllstoffen, insbesondere Partikeln aus Metall, Glas, Kohlenstoff und/oder Kunststoff, Haftvermittlern und/oder Katalysatoren aufweisen.

Der reaktive Klebstoff weist zumindest ein Polyurethan auf. Beispielsweise kann der reaktive Klebstoff ein aliphatisches Polyurethan und/oder ein aromatisches Polyurethan aufweisen. Vorzugsweise weist der reaktive Klebstoff zusätzlich zu dem Polyurethan zumindest einen Vernetzer, bevorzugt oberflächendeaktiviertes Isocyanat, auf. Alternativ kann der Vernetzer beliebige andere geeignete Substanzen, wie beispielsweise alle aromatischen Isocyanate und/oder aliphatischen Isocyanate, aufweisen. Der Vernetzer kann separat zu dem Polyurethan ausgebildet oder in das Polyurethan integriert sein. Ferner kann der reaktive Klebstoff beliebige weitere Zusatzstoffe aufweisen oder alternativ frei von Zusatzstoffen sein. Hierdurch kann das asymmetrische Klebemittel zur Fixierung eines Textil-Fügepartners an einen nicht-Textil-Fügepartner verwendet werden und damit in vielen verschiedenen Anwendungsbereichen, wie beispielsweise dem Medizinbereich und der Automobilindustrie, zum Einsatz kommen.

Es wäre denkbar, dass der reaktive Klebstoff mittels Bestrahlung, insbesondere UV-Bestrahlung, oder mittels eines Hinzufügens einer weiteren Substanz vernetzbar sein könnte. Um eine Herstellung des asymmetrischen Klebemittels zu vereinfachen, wird vorgeschlagen, dass der reaktive Klebstoff mittels Hitze vernetzbar ist. Vorzugsweise beträgt eine Vernetzungstemperatur des reaktiven Klebstoffs mindestens 80°C, besonders bevorzugt mindestens 90°C. Hierdurch kann durch einen einzigen Verfahrensschritt der thermoplastische Klebstoff angeschmolzen und die Vernetzung des reaktiven Klebstoffs initiiert werden. Vorteilhaft kann auf zusätzliche Schritte wie eine Bestrahlung des reaktiven Klebstoffs, welche aufwändige und kostspielige Geräte benötigen, verzichtet werden.

Es wäre denkbar, dass der reaktive Klebstoff in einem unvernetzten Zustand unabhängig von einer Temperatur in einem flüssigen oder hochviskosen Zustand vorliegen und ausschließlich nach der Vernetzung in fester Form vorliegen könnte. Der reaktive Klebstoff ist als ein latent reaktiver Klebstoff ausgebildet, welcher in einem unvernetzten Zustand ein thermoplastisches Verhalten aufweist. Unter einem "latent reaktiven" Klebstoff soll ein Klebstoff verstanden werden, welcher in einem unvernetzten Zustand lagerbar und ohne Hinzufügen weiterer Substanzen vernetzbar ist. Darunter, dass der reaktive Klebstoff in dem unvernetzten Zustand ein "thermoplastisches Verhalten" aufweist, soll verstanden werden, dass der Klebstoff in dem unvernetzten Zustand eine Schmelztemperatur aufweist, welche einen reversiblen Übergang zwischen einem flüssigen oder hochviskosen Zustand und einem festen Zustand des reaktiven Klebstoffs definiert. Der Unterschied zwischen einem Klebstoff, welcher ein thermoplastisches Verhalten aufweist, und einem thermoplastischen Klebstoff, besteht insbesondere darin, dass der Klebstoff nur in bestimmten Zuständen das thermoplastische Verhalten aufweisen kann, während der reversible Übergang des thermoplastischen Klebstoffs unabhängig von dem Zustand des thermoplastischen Klebstoffs ist. Vorzugsweise weist der reaktive Klebstoff in dem unvernetzten Zustand eine Vernetzungstemperatur auf, welche oberhalb der Schmelztemperatur liegt. Die Vernetzungstemperatur definiert insbesondere einen irreversiblen Übergang zwischen einem unvernetzten Zustand und einem vernetzten Zustand des Klebstoffs. Vorzugsweise ist der reaktive Klebstoff in dem vernetzten Zustand nicht mehr von dem festen Zustand in den flüssigen oder hochviskosen Zustand überführbar. Die Schmelztemperatur des reaktiven Klebstoffs beträgt mindestens 35°C. Hierdurch kann der reaktive Klebstoff so wie der thermoplastische Klebstoff in dem festen Zustand gelagert und erst zur Verarbeitung angeschmolzen werden.

Vorstellbar wäre, dass die Schmelztemperatur des reaktiven Klebstoffs in dem unvernetzten Zustand im Wesentlichen identisch zur Vernetzungstemperatur des reaktiven Klebstoffs ist. Um die Herstellung des asymmetrischen Klebemittels noch weiter zu vereinfachen, wird vorgeschlagen, dass die Schmelztemperatur des reaktiven Klebstoffs in dem unvernetzten Zustand mindestens 20°C, vorteilhaft mindestens 30°C, niedriger ist als die Vernetzungstemperatur des reaktiven Klebstoffs. Hierdurch kann eine ungewollte Initiierung der Vernetzungsreaktion des reaktiven Klebstoffs bei einem Anschmelzen des reaktiven Klebstoffs vermieden werden. Vorteilhaft kann der reaktive Klebstoff beliebig oft angeschmolzen werden, ohne zu vernetzen, wodurch eine Herstellung und/oder Anwendung des asymmetrischen Klebemittels vereinfacht werden kann.

Die Schmelztemperatur des reaktiven Klebstoffs beträgt mindestens 35°C, besonders bevorzugt mindestens 45°C, und höchstens 70°C, besonders bevorzugt höchstens 60°C. Hierdurch kann ein Anordnen des asymmetrischen Klebemittels an den Fügepartnern vereinfacht werden. Vorteilhaft kann das asymmetrische Klebemittel auf einfache Weise bis zu einem Anschmelzen der Oberfläche der ersten Klebstoffschicht erwärmt werden, wodurch ein Positionieren der ersten Klebstoffschicht auf einem der Fügepartner erleichtert werden kann.

Es wäre möglich, dass das asymmetrische Klebemittel als ein doppelseitiges Klebeband ausgebildet ist und einen zwischen den Klebstoffschichten angeordneten Träger aufweist. Bevorzugt ist die zweite Klebstoffschicht unmittelbar an der ersten Klebstoffschicht angeordnet. Insbesondere ist das asymmetrische Klebemittel als ein asymmetrischer Klebefilm ausgebildet. Vorzugsweise weist das asymmetrische Klebemittel einen lösbar mit einer der Klebstoffschichten verbundenen Liner auf. Insbesondere ist der Liner nach einem Auftragen einer der Klebstoffschichten, welche frei von Linern ist, auf einem der Fügepartner entfernbar, um die andere der Klebstoffschichten zur Kontaktierung durch den anderen Fügepartner freizulegen. Der Liner kann beliebige, dem Fachmann aus dem Bereich der Liner bekannte, Materialien aufweisen. Beispielsweise könnte der Liner einen Zellstoff, ein Gewebe und/oder eine Kunststofffolie aufweisen. Vorzugsweise weist der Liner ein silikonisiertes Material, insbesondere einen silikonisierten Zellstoff, auf. Hierdurch kann das asymmetrische Klebemittel auf eine einfache und kostengünstige Weise bereitgestellt werden.

Die Erfindung geht ferner aus von einem Verfahren zur Herstellung des asymmetrischen Klebemittels.

Es wird vorgeschlagen, dass der reaktive Klebstoff in einem feuchten Zustand auf einen Liner beschichtet wird, der reaktive Klebstoff anschließend zur Bildung einer ersten Klebstoffschicht getrocknet wird, und der thermoplastische Klebstoff zur Bildung einer zweiten Klebstoffschicht auf die erste Klebstoffschicht kaschiert wird. Es wäre möglich, dass der Liner als ein Prozess-Liner ausgebildet ist und noch vor einem Abschluss der Herstellung des asymmetrischen Klebemittels entfernt wird. Bevorzugt ist der Liner als ein Release-Liner ausgebildet, welcher dazu vorgesehen ist, direkt vor einer Anwendung des asymmetrischen Klebemittels entfernt zu werden. Hierdurch kann ein asymmetrisches Klebemittel, welches eine verbesserte Verbindung von bisher schwer verbindbaren Fügepartnern ermöglicht, auf eine einfache und kostengünstige Weise bereitgestellt werden. Durch das Kaschieren der zweiten Klebstoffschicht auf die erste Klebstoffschicht direkt nach der Beschichtung des reaktiven Klebstoffs wird ausgenutzt, dass der reaktive Klebstoff noch nicht vollständig in den festen Zustand übergegangen ist und daher einen Tack aufweist, welcher den Kaschiervorgang erleichtert.

Insbesondere sind der thermoplastische Klebstoff und der Liner bahnförmig ausgebildet und werden bevorzugt mittels einer Reihe von Führungszylindern entlang einer Prozessstrecke geführt. Vorteilhaft werden der thermoplastische Klebstoff und der Liner von Versorgerrollen abgewickelt und das asymmetrische Klebemittel nach dem Kaschiervorgang in aufeinanderliegenden Schichten auf eine Produktrolle aufgewickelt. Bevorzugt folgt auf den Aufwickelvorgang zumindest ein Konfektioniervorgang. Der Konfektioniervorgang kann eine beliebige Anzahl an Schneidprozessen und/oder Stanzprozessen aufweisen. Bevorzugt weist der Konfektioniervorgang eine Spulenwicklung des asymmetrischen Klebemittels auf. Die Spulenwicklung umfasst vorzugsweise zumindest einen Schneidprozess oder Stanzprozess, in welchem das asymmetrische Klebemittel zu einem dünnen Streifen verarbeitet wird, und zumindest einen Wickelprozess auf, in welchem der Streifen auf eine weitere Produktrolle aufgewickelt wird. Der Wickelprozess umfasst vorteilhaft zumindest eine Umkehr des Wicklungssinns, welche besonders vorteilhaft durchgeführt wird, wenn der Streifen ein Ende der Versorgerrolle erreicht, wodurch der Streifen in aufeinanderliegenden Schichten aufgewickelt wird. Hierdurch kann eine Menge an Material, welche pro weiterer Produktrolle zur Verfügung gestellt werden kann, erhöht werden.

Vorteilhaft wird der thermoplastische Klebstoff vor dem Kaschiervorgang einer Koronabehandlung unterzogen. Vorteilhaft wird der thermoplastische Klebstoff zu einem geerdeten Führungszylinder geführt, an welchem zur Durchführung der Koronabehandlung zumindest eine Elektrode angeordnet ist. Hierdurch kann die Herstellung des asymmetrischen Klebemittels noch weiter vereinfacht werden. Vorteilhaft kann auf ein Anschmelzen des thermoplastischen Klebstoffs vor dem Kaschiervorgang verzichtet werden.

Der reaktive Klebstoff ist als ein latent reaktiver Klebstoff ausgebildet und es wird ein nach dem Trocknungsvorgang verbleibender Tack des reaktiven Klebstoffs für den Kaschiervorgang genutzt. Vorzugsweise liegt eine Verarbeitungstemperatur des Trocknungsvorgangs über der Schmelztemperatur des reaktiven Klebstoffs, sodass der reaktive Klebstoff im Anschluss an den Trocknungsvorgang für eine begrenzte Zeit den Tack aufweist. Hierdurch kann die Herstellung des asymmetrischen Klebemittels noch weiter vereinfacht werden. Vorteilhaft kann auf einen zusätzlichen Verfahrensschritt zur Erwärmung des reaktiven Klebstoffs vor dem Kaschiervorgang verzichtet werden. Besonders vorteilhaft kann vermieden werden, dass durch den zusätzlichen Verfahrensschritt eine Robustheit und eine Haftdauer des asymmetrischen Klebemittels reduziert werden.

Das asymmetrische Klebemittel und das Verfahren sollen hierbei nicht auf die oben beschriebene Anwendung und Ausführungsform beschränkt sein. Insbesondere können das asymmetrische Klebemittel und das Verfahren zu einer Erfüllung einer hierin beschriebenen Funktionsweise eine von einer hierin genannten Anzahl von einzelnen Elementen, Bauteilen, Einheiten und Verfahrensschritten abweichende Anzahl aufweisen.

Weitere Vorteile ergeben sich aus der folgenden Zeichnungsbeschreibung. In den Zeichnungen ist ein Ausführungsbeispiel der Erfindung dargestellt. Die Zeichnungen, die Beschreibungen und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen asymmetrischen Klebemittels in einer Querschnittsansicht und
- Fig. 2: ein schematisches Verlaufsdiagramm eines Verfahrens zur Herstellung des asymmetrischen Klebemittels.

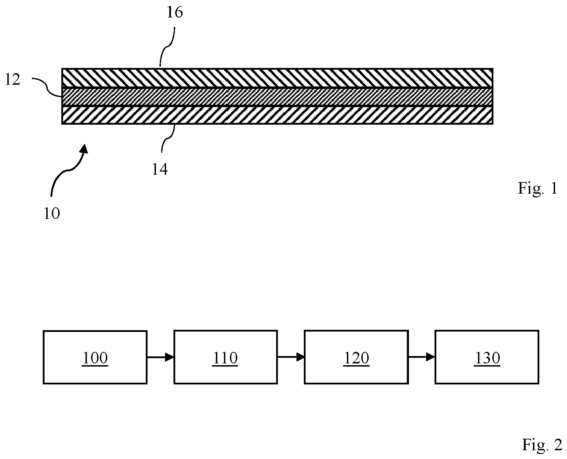

Figur 1 zeigt ein asymmetrisches Klebemittel 10. Das asymmetrische Klebemittel 10 dient einer Verbindung zweier unterschiedlicher Fügepartner (nicht dargestellt). Einer der Fügepartner ist als ein Federstahlband ausgebildet. Der andere Fügepartner ist als ein Polyester-Gewebe ausgebildet. Alternativ könnten die Fügepartner beliebige andere Materialien, Strukturen und/oder Formen aufweisen, wobei die im asymmetrischen Klebemittel 10 verwendeten Klebstoffe sich, falls notwendig, ändern würden.

Das asymmetrische Klebemittel 10 ist als ein asymmetrischer Klebefilm ausgebildet. Das asymmetrische Klebemittel 10 weist einen Liner 16 auf. Der Liner 16 ist als ein Release-Liner ausgebildet. Alternativ könnte der Liner 16 als ein Prozess-Liner ausgebildet sein. Ferner könnte das asymmetrische Klebemittel 10 als ein doppelseitiges Klebeband ausgebildet sein. In diesem Fall würde das asymmetrische Klebemittel 10 alternativ oder zusätzlich zu dem Liner 16 einen Träger (nicht dargestellt) aufweisen. Der Liner 16 ist weist ein silikonisiertes Papier auf. Alternativ könnten der Liner 16 oder der Träger einen Schaum, einen Gewebestoff, einen Vliesstoff, eine andere Art von Zellstoff und/oder eine Kunststofffolie aufweisen. Das asymmetrische Klebemittel 10 weist eine erste Klebstoffschicht 12 auf. Der Liner 16 ist auf einer ersten Hauptseite der ersten Klebstoffschicht 12 angeordnet.

Die erste Klebstoffschicht 12 weist einen reaktiven Klebstoff auf. Der reaktive Klebstoff weist ein Polyurethan auf. Alternativ könnte der reaktive Klebstoff beliebige andere geeignete Substanzen, wie beispielsweise Epoxidharze, Amine und/oder Amide aufweisen. Das Polyurethan ist als ein aliphatisches Polyurethan ausgebildet. Alternativ könnte das Polyurethan als eine andere Art von Polyurethan, beispielsweise als ein aromatisches Polyurethan, ausgebildet sein. Der reaktive Klebstoff ist mittels Hitze vernetzbar. Alternativ könnte der reaktive Klebstoff mittels einer Bestrahlung oder einem Beifügen einer weiteren Substanz vernetzbar sein. Eine Vernetzungstemperatur des reaktiven Klebstoffs beträgt etwa 100°C. Der reaktive Klebstoff ist als ein latent reaktiver Klebstoff ausgebildet. Eine Schmelztemperatur des reaktiven Klebstoffs in einem unvernetzten Zustand beträgt etwa 50°C.

Das asymmetrische Klebemittel 10 weist eine zweite Klebstoffschicht 14 auf. Die zweite Klebstoffschicht 14 ist der ersten Klebstoffschicht 12 gegenüberliegend angeordnet. Die zweite Klebstoffschicht 14 ist unmittelbar an der ersten Klebstoffschicht 12 angeordnet. Der Liner 16, die erste Klebstoffschicht 12 und die zweite Klebstoffschicht 14 sind in Form einer Sandwich-Bauweise angeordnet. Der Liner 16, die erste Klebstoffschicht 12 und die zweite Klebstoffschicht 14 weisen jeweils eine Dicke von etwa 50 µm auf. Je nach Anwendungsbereich und verwendeter Klebstoffarten können sich diese Dicken ändern.

Die zweite Klebstoffschicht 14 weist einen thermoplastischen Klebstoff auf. Der thermoplastische Klebstoff weist ein Copolyester-Elastomer auf. Alternativ könnte die zweite Klebstoffschicht 14 beliebige andere geeignete Substanzen aufweisen, wie beispielsweise Polyamide, Polyethylene und/oder Polyalphaolefine. Eine Schmelztemperatur des thermoplastischen Klebstoffs beträgt etwa 120°C.

Figur 2 zeigt ein schematisches Verlaufsdiagramm eines Verfahrens zur Herstellung des asymmetrischen Klebemittels. In einem Beschichtungsschritt 100 wird der reaktive Klebstoff in einem feuchten Zustand auf den Liner 16 beschichtet. Zur Beschichtung des reaktiven Klebstoffs wird eine Rakel verwendet, es wäre jedoch auch denkbar, andere Beschichtungsverfahren wie beispielsweise eine Vorhangbeschichtung zu verwenden.

In einem Trocknungsschritt 110 werden der Liner 16 und der reaktive Klebstoff durch einen handelsüblichen Trocknungskanal geführt. Die Verarbeitungstemperatur des Trocknungskanals beträgt etwa 60°C. Im Anschluss an den Trocknungsschritt 110 liegt der reaktive Klebstoff in Form der ersten Klebstoffschicht 12 vor und weist einen Tack auf. Der Trocknungsschritt 110 folgt hierbei auf den Beschichtungsschritt 100.

In einem Vorbehandlungsschritt 120 wird der thermoplastische Klebstoff einer Koronabehandlung unterzogen. Der thermoplastische Klebstoff liegt in Form einer nichtklebenden Folie vor. Der thermoplastische Klebstoff wird über einen geerdeten Führungszylinder geführt, an welchem eine Mehrzahl von Elektroden angeordnet sind, mittels welcher die Koronabehandlung durchgeführt wird. Der Vorbehandlungsschritt 120 kann gleichzeitig mit oder kurz nach dem Trocknungsschritt 110 erfolgen.

In einem Kaschierschritt 130 wird der thermoplastische Klebstoff zur Bildung der zweiten Klebstoffschicht 14 auf die erste Klebstoffschicht 12 kaschiert. Hierbei wird genutzt, dass die erste Klebstoffschicht 12 im Anschluss an den Trocknungsvorgang 110 noch nicht vollständig in den festen Zustand übergegangen ist. Ein zusätzlicher Verfahrensschritt zum Anschmelzen der ersten Klebstoffschicht 12 ist nicht notwendig, wodurch die Klebstoffschichten 12, 14 weniger Temperaturschwankungen ausgesetzt werden und eine höhere Robustheit aufweisen. Der Kaschierschritt 130 folgt hierbei auf den Vorbehandlungsschritt 120.

### Bezugszeichen

- 10: Asymmetrisches Klebemittel
- 12: Erste Klebstoffschicht
- 14: Zweite Klebstoffschicht
- 16: Liner
- 100: Beschichtungsschritt
- 110: Trocknungsschritt
- 120: Vorbehandlungsschritt
- 130: Kaschierschritt

## Patentansprüche

1. Asymmetrisches Klebemittel (10) zur Verbindung zweier unterschiedlicher Fügepartner, mit einer ersten Klebstoffschicht (12) und einer der ersten Klebstoffschicht (12) gegenüberliegend angeordneten zweiten Klebstoffschicht (14), **dadurch gekennzeichnet, dass** die erste Klebstoffschicht (12) zumindest einen reaktiven Klebstoff aufweist, welcher als ein latent reaktiver Klebstoff ausgebildet ist, zumindest ein Polyurethan und eine Schmelztemperatur von mindestens 35°C und höchstens 70°C aufweist und in einem unvernetzten Zustand ein thermoplastisches Verhalten aufweist, wobei die erste Klebstoffschicht (12) in einem vernetzten Zustand des reaktiven Klebstoffs frei von haftklebrigen Oberflächen ist und die zweite Klebstoffschicht (14) zumindest einen thermoplastischen Klebstoff aufweist, welcher zumindest ein Copolyester-Elastomer und eine Schmelztemperatur von mindestens 90°C aufweist.

2. Asymmetrisches Klebemittel (10) nach einem der vorhergehenden Ansprüche, **dadurch gekennzeichnet, dass** der reaktive Klebstoff mittels Hitze vernetzbar ist.

3. Asymmetrisches Klebemittel (10) nach Anspruch 2, **dadurch gekennzeichnet, dass** eine Schmelztemperatur des reaktiven Klebstoffs in einem unvernetzten Zustand mindestens 20°C niedriger ist als die Vernetzungstemperatur des reaktiven Klebstoffs.

4. Asymmetrisches Klebemittel (10) nach einem der vorhergehenden Ansprüche, **dadurch gekennzeichnet, dass** die zweite Klebstoffschicht (14) unmittelbar an der ersten Klebstoffschicht (12) angeordnet ist.

5. Verfahren zur Herstellung eines asymmetrischen Klebemittels (10), insbesondere nach einem der vorhergehenden Ansprüche, **dadurch gekennzeichnet, dass** ein reaktiver Klebstoff, welcher als ein latent reaktiver Klebstoff ausgebildet ist, zumindest ein Polyurethan und eine Schmelztemperatur von mindestens 35°C und höchstens 70°C aufweist und in einem unvernetzten Zustand ein thermoplastisches Verhalten aufweist, in einem feuchten Zustand auf einen Liner (16) beschichtet wird, der reaktive Klebstoff anschließend zur Bildung einer ersten Klebstoffschicht (12) getrocknet wird, welche in einem vernetzten Zustand des reaktiven Klebstoffs frei von haftklebrigen Oberflächen ist, und ein thermoplastischer Klebstoff, welcher zumindest ein Copolyester-Elastomer und eine Schmelztemperatur von mindestens 90°C aufweist, zur Bildung einer zweiten Klebstoffschicht (14) auf die erste Klebstoffschicht (12) kaschiert wird, wobei das Kaschieren direkt nach der Beschichtung des reaktiven Klebstoffs stattfindet, der reaktive Klebstoff noch nicht vollständig in den festen Zustand übergegangen ist und ein nach dem Trocknungsvorgang verbleibender Tack des reaktiven Klebstoffs für den Kaschiervorgang genutzt wird.

6. Verfahren nach Anspruch 5, **dadurch gekennzeichnet, dass** der thermoplastische Klebstoff vor dem Kaschiervorgang einer Koronabehandlung unterzogen wird.

## Claims

1. Asymmetric bonding means (10) for fixation of two different bonding partners, comprising a first adhesive layer (12) and a second adhesive layer (14) arranged opposite to the first adhesive layer (12), the first adhesive layer (12) comprises at least one reactive adhesive, the reactive adhesive being embodied as a latently reactive adhesive, comprising at least one polyurethane and a melting point of at least 35°C and at most 70°C and exhibiting thermoplastic properties in an un-cured state, wherein the first adhesive layer (12) has no tacky surfaces in a cured state of the reactive adhesive, and wherein the second adhesive layer (14) comprises at least one thermoplastic adhesive, the thermoplastic adhesive comprising at least one copolyester elastomer and a melting point of at least 90°C.

2. Asymmetric bonding means (10) according to any of the preceding claims, **characterized in that** the reactive adhesive is heat-curable.

3. Asymmetric bonding means (10) according to claim 2, **characterized in that** a melting point of the reactive adhesive in an un-cured state is at least 20°C lower than the curing temperature of the reactive adhesive.

4. Asymmetric bonding means (10) according to any of the preceding claims, **characterized in that** the second adhesive layer (14) is arranged directly at the first adhesive layer (12).

5. Method for manufacturing an asymmetric bonding means (10), in particular according to any of the preceding claims, **characterize in that** a reactive adhesive, the reactive adhesive being embodied as a latently reactive adhesive, comprising at least one polyurethane and a melting point of at least 35°C and at most 70°C and exhibiting thermoplastic properties in an un-cured state, is coated onto a liner (16) in a wet state and dried to form a first adhesive layer (12), the first adhesive layer (12) having no tacky surfaces in a cured state of the reactive adhesive, wherein a thermoplastic adhesive comprising at least one copolyester elastomer and a melting point of at least 90°C is laminated onto the first adhesive layer (12) to form a second adhesive layer (14), wherein the lamination is performed directly after the coating of the reactive adhesive while the reactive adhesive has not yet fully transitioned into the solid state and a tackiness of the reactive adhesive which remains after the drying step is taken advantage of for the lamination process.

6. Method according to claim 5, **characterized in that** the thermoplastic adhesive is corona-treated before the lamination step.

## Revendications

1. Moyen de collage asymétrique (10) pour la fixation de deux éléments de collage différents, comprenant une première couche adhésive (12) et une deuxième couche adhésive (14) disposée à l'opposé de la première couche adhésive (12), la première couche adhésive (12) comprenant au moins un adhésif réactif, l'adhésif réactif étant réalisé sous la forme d'un adhésif à réactivité latente, comprenant au moins un polyuréthane et un point de fusion d'au moins 35°C et d'au plus 70°C et présentant des propriétés thermoplastiques à l'état non durci, dans lequel la première couche adhésive (12) n'a pas de surfaces collantes lorsque l'adhésif réactif est dans un état durci, et dans lequel la seconde couche adhésive (14) comprend au moins un adhésif thermoplastique, l'adhésif thermoplastique comprenant au moins un élastomère copolyester et un point de fusion d'au moins 90°C.

2. Moyen de collage asymétrique (10) selon l'une quelconque des revendications précédentes, **caractérisé en ce que** la colle réactive est thermodurcissable.

3. Moyen de collage asymétrique (10) selon la revendication 2, **caractérisé en ce qu'**un point de fusion de l'adhésif réactif à l'état non durci est inférieur d'au moins 20°C à la température de durcissement de l'adhésif réactif.

4. Moyen de collage asymétrique (10) selon l'une quelconque des revendications précédentes, **caractérisé en ce que** la deuxième couche adhésive (14) est disposée directement au niveau de la première couche adhésive (12).

5. Procédé de fabrication d'un moyen de collage asymétrique (10), notamment selon l'une quelconque des revendications précédentes, **caractérisé en ce qu'**on utilise un adhésif réactif, l'adhésif réactif étant réalisé sous la forme d'un adhésif à réactivité latente, comprenant au moins un polyuréthane et un point de fusion d'au moins 35°C et d'au plus 70°C et présentant des propriétés thermoplastiques à l'état non durci, est appliqué sur un revêtement (16) à l'état humide et séché pour former une première couche adhésive (12), la première couche adhésive (12) n'ayant pas de surfaces collantes lorsque l'adhésif réactif est dans un état durci, sur lequel un adhésif thermoplastique comprenant au moins un élastomère copolyester et ayant un point de fusion d'au moins 90°C est laminé sur la première couche adhésive (12) pour former une deuxième couche adhésive (14), le laminage étant effectué directement après le revêtement de l'adhésif réactif alors que l'adhésif réactif n'est pas encore complètement passé à l'état solide et dont le caractère collant persistant après l'étape de séchage est mis à profit pour le processus de laminage.

6. Procédé selon la revendication 5, **caractérisé en ce que** l'adhésif thermoplastique est traité par effet corona avant l'étape de laminage.
